# EUROPÄISCHE PATENTANMELDUNG

(11) **EP 4 005 723 A1**
(43) Veröffentlichungstag der Anmeldung: **01.06.2022**
(21) Anmeldenummer: 21209575.6
(22) Anmeldetag: 22.11.2021
(51) Int. Cl.: B23K 20/10, H01R 43/28

(54) **ULTRASCHALLVERDICHTEN VON LITZEN**

(30) Priorität: 30.11.2020 DE 102020131708
(71) Anmelder: Wieland Electric GmbH, 96052 Bamberg (DE)
(72) Erfinder: BETZ, Wilhelm, 96250 Ebensfeld/Unterneuses (DE)
(74) Vertreter: Tergau & Walkenhorst Patentanwälte PartGmbB

(57) **Zusammenfassung**

Kabel oder Leitungen (16) mit Litzen (14), hergestellt in einer Anordnung (1) zum Ultraschallverdichten von Litzen (14) mit einem Amboss (2) und einer Sonotrode (4), wobei der Amboss (2) und die Sonotrode (4) jeweils einen Kammerabschnitt (8a, 8b) aufweisen, der jeweils derart ausgebildet sind, dass die Kammerabschnitte (8a, 8b) des Ambosses (2) und der Sonotrode (4) beim Ultraschallverdichten eine gemeinsame Verdichtungskammer (6) zur Aufnahme der Litzen (14) bilden, sollen eine besonders leichte und damit auch schnelle und sichere Installation in Kontaktklemmen oder anderen Kabelaufnahmen ermöglichen. Dazu ist die Verdichtungskammer (6) im Querschnitt im Wesentlichen n-eckförmig mit n>4 ausgebildet.

## Beschreibung

Die Erfindung betrifft eine Anordnung zum Ultraschallverdichten von Litzen mit einem Amboss und einer Sonotrode, wobei der Amboss und die Sonotrode jeweils einen Kammerabschnitt aufweisen, der jeweils derart ausgebildet sind, dass die Kammerabschnitte des Ambosses und der Sonotrode beim Ultraschallverdichten eine gemeinsame Verdichtungskammer zur Aufnahme der Litzen bilden. Ebenso betrifft die Erfindung ein Verfahren zur Herstellung eines Kabels.

Kabel werden in der Elektro- und Informationstechnik dazu verwendet Energie oder Signale bzw. Informationen über einzelne oder mehrere Leitungen zu übertragen. Dabei bestehen die Leitungen aus metallischen Leitern in Form von Litzen, die zumeist eine isolierende Umhüllung aufweisen und nur im Kontaktbereich an beiden Enden der Leitung freiliegen. Die Litzen werden dabei aus einer Vielzahl an dünnen Einzeldrähten gebildet.

Diese freiliegenden Litzen werden beim Anschluss des Kabels bzw. der Leitungen üblicherweise in Kontaktklemmen eingeführt und so mit einem Endgerät oder Verteiler verbunden. Das Einführen der Litzen in die meist enge und kreisrunde Aufnahme der Kontaktklemmen führt dabei aber regelmäßig zu Schwierigkeiten, da die Einzeldrähte der Litzen leicht biegsam sind und daher bei Kontakt mit der Wandung der Einführöffnung leicht abknicken bzw. an der Öffnung vorbei geführt werden. So fransen die Litzen leicht aus, was das weitere Einführen in die Kontaktklemme erschwert und auch den Kontakt verschlechtert.

Es ist bekannt, dass die Litzen mittels Ultraschallverdichtung miteinander verbunden werden können. Dabei werden die Litzen in einer rechteckigen Verdichtungskammer eingeführt und mittels einer Sonotrode mit eine Hochfrequenzschwingung beaufschlagt. Diese Hochfrequenzschwingung führt dazu, dass zwischen den Einzeldrähten einer Litze eines Kabels aufgrund des Reibungsvorgangs und Anpressdrucks eine ausreichende Wärme erzeugt wird, so dass die Einzeladern miteinander kalt verpresst werden. Aufgrund der rechteckigen Verdichtungskammer sind auch die Litzen im Querschnitt am Ende des Verdichtungsschrittes rechteckig ausgebildet. Dies führt allerdings in der Praxis dazu, dass der diagonale Durchmesser der rechteckigen Litzen regelmäßig zu groß ist für die kreisrunde Aufnahme, sodass es zu Schwierigkeiten bei der Installation der Kabel kommen kann.

Eine Anordnung zum Ultraschallverdichten von Litzen ist aus der Druckschrift DE 20 2013 012 520 U1 bekannt.

Der Erfindung liegt daher die Aufgabe zugrunde eine Anordnung bzw. ein Verfahren zur Herstellung von Kabeln bzw. Verdichtung von Litzen anzugeben, die eine besonders leichte und damit auch schnelle und sichere Installation in Kontaktklemmen oder anderen Kabelaufnahmen ermöglicht.

Diese Aufgabe wird erfindungsgemäß mit den Merkmalen des kennzeichnenden Teils der unabhängigen Ansprüche 1 und 9 gelöst. Vorteilhafte weitere Ausgestaltungen sind Gegenstand der Unteransprüche.

Die Erfindung geht von der Überlegung aus, dass eine leichtere Aufnahme der verdichteten Litzen ermöglicht wird, wenn der maximale Durchmesser des Querschnitts der Litzen reduziert werden kann. Dies wäre insbesondere dann möglich, wenn der Querschnitt vom bislang üblichen rechteckigen Querschnitt hin zu einem eher kreisrunden Querschnitt verlagert werden könnte, da dieser gemessen an der Querschnittsfläche den geringsten Durchmesser aufweist. Für die technische Umsetzung einer Verdichtungskammer der aus Kammerabschnitten einer Sonotrode und einem ein- oder mehrteiligen Amboss als Gegenpart gebildet ist bedeutet diese Annäherung, dass von einem viereckigen Kammerquerschnitt auf einen vieleckigen mit mehr als vier Ecken gewechselt wird. Dadurch kann die eher kreisrunde Form der Aufnahme üblicher Kontaktklemmen bestmöglich angenähert werden.

Da einerseits eine möglichst kreisrunde Form der Verdichtungskammer bzw. des anschließenden Litzenquerschnitts gewünscht ist, andererseits aber auch für die Verdichtung gerade Gegenflächen als Gegendruck benötigt werden, ist in bevorzugter Ausgestaltung die Verdichtungskammer im Wesentlichen achteckig ausgeformt. Für eine symmetrische Anordnung und damit jeder schwingungsinduzierenden Fläche der Sonotrode eine entsprechende Gegenfläche beim ein- oder mehrteiligen Amboss zugewiesen wird, entspricht die Anzahl der Wandungen der Kammerabschnitte der Sonotrode in vorteilhafter Weise der der Ambosse. Dies bedeutet im Falle der achteckigen Verdichtungskammer, dass vier Wandungen von der Sonotrode gebildet werden und die vier übrigen Wandungen von dem ein oder mehrteiligen Amboss.

Die Schwingungen der Sonotrode werden in bevorzugter Ausgestaltung über eine Wellenstruktur der Wandung der Verdichtungskammer auf die Litzen übertragen. Dabei überträgt der Wellenberg aufgrund des Druckes den er auf die Litzen ausübt, die Schwingung in die Verdichtungskammer. Um den benötigten Gegendruck aufbauen zu können, sind auch die Wandungen des Ambosses in vorteilhafter Weise mit einer entsprechenden Wellenstruktur belegt.

Dabei ist in besonders vorteilhafter Ausgestaltung sowohl beim Amboss als auch der Sonotrode nur die Hälfte der Wandungen mit einer derartigen Wellenstruktur ausgestattet und insbesondere so, dass nur jede zweite Wandung eine solche Wellenstruktur aufweist.

Für die Herstellung eines Kabels mit mehreren Leitungen ist es wünschenswert, dass jede einzelne Leitung bzw. die Litzen jeder einzelnen Leitung Ultraschallverdichtet werden. Zur Reduzierung der Arbeitsschritte weist daher der Amboss und auch die Sonotrode in besonders vorteilhafter Ausgestaltung mehrere nebeneinander angeordnete Kammerabschnitte auf, sodass mehrere Verdichtungskammern gebildet werden. Bevorzugt entspricht die Anzahl der Kammerabschnitte mindestens der Anzahl der Leitungen eines zu verarbeitenden Kabels, sodass die Litzen aller Leitungen eines Kabels einzeln in einem einzigen Arbeitsschritt verdichtet werden.

Da die Litzen im Bereich der Isolation auf der einen Seite und im Bereich des Litzenendes auf der anderen Seite unterschiedliche Freiheitsgrade aufweisen, ist eine gleichmäßige Verdichtung erschwert. Um diesem Umstand Rechnung zu tragen, ist die Verdichtungskammer in vorteilhafter Ausgestaltung so aufgebaut, dass sie in Längsrichtung, also in Einsteckrichtung der Litzen, unterschiedliche Querschnittsflächen aufweist. Insbesondere ist der Querschnitt im Bereich der Isolation enger ausgebildet als im Bereich der Litzenenden. Dies kann in bevorzugter Ausbildung durch einen sich konisch verbreiternden Kammerabschnitt des Ambosses erreicht werden.

Die mit der Erfindung erzielten Vorteile bestehen insbesondere darin, dass durch die Annäherung des Querschnitts der verdichteten Litzen an eine Kreisform eine wesentlich einfachere und sichere Einführung der Leitungen in entsprechende Aufnahmen von Kontaktklemmen oder anderen Kabelaufnahmen ermöglicht wird. Dies wird dadurch erreicht, dass der maximale Durchmesser durch eine Vieleckform der Verdichtungskammer reduziert werden kann.

Anhand der in den Zeichnungsfiguren dargestellten Ausführungsbeispiele ist die Erfindung mit weiteren Einzelheiten erläutert. Es zeigen:
- Fig. 1: eine Anordnung zur Verdichtung von Litzen,
- Fig. 2: ein Amboss für eine Anordnung zur Verdichtung von Litzen,
- Fig. 3: ein Querschnitt einer Verdichtungskammer,
- Fig. 4: ein Kammerabschnitt eines Ambosses,
- Fig. 5: ein Kammerabschnitt eines Ambosses in Schrägdarstellung,
- Fig. 6: eine Leitung mit verdichteter Litze.

Gleiche Merkmale sind in allen Figuren mit den gleichen Bezugszeichen versehen.

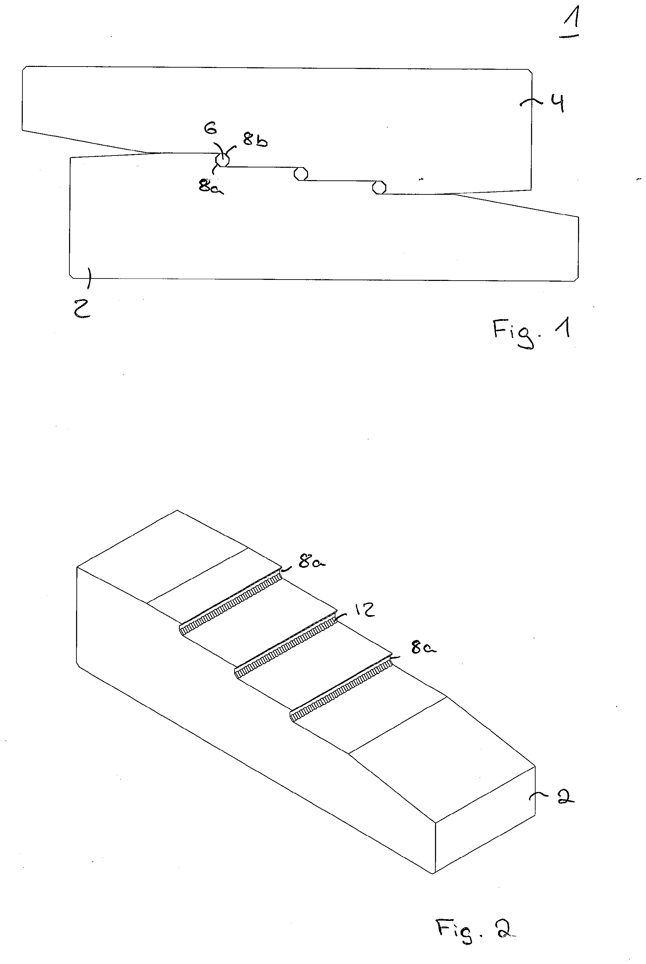

Ein Ausführungsbeispiel einer Anordnung 1 zur Verdichtung von Litzen von Leitern eines Kabels ist in Fig. 1 dargestellt. Die Anordnung 1 umfasst dabei einen Amboss 2, der im Ausführungsbeispiel einteilig ausgebildet ist. Dieser kann aber auch mehrteilig ausgebildet werden. Weiterhin umfasst die Anordnung 1 eine Sonotrode 4 zur Indizierung von Schwingungen in eine Verdichtungskammer 6. Sowohl der Amboss 2 als auch die Sonotrode 6 weisen eine Anzahl von Kammerabschnitten 8a, 8b auf. Dabei bildet ein Kammerabschnitt 8a des Ambosses 2 mit einem Kammerabschnitt 8b der Sonotrode 6 wenn zusammengeführt und in der Nutzung eine Verdichtungskammer 6. Die Verdichtungskammer 6 ist eine sich in Längsrichtung (L) erstreckende Kammer, die quer zur Längsrichtung einen Querschnitt aufweist, der durch die Wandungen 10a, 10b der Kammerabschnitte 8a, 8b bestimmt ist.

Im Ausführungsbeispiel nach Fig. 1 umfassen die Kammerabschnitte 8a, 8b des Ambosses 2 und der Sonotrode 4 jeweils vier Wandungen 10a, 10b, weshalb die Verdichtungskammer 6 achteckig ausgebildet ist. Sowohl der Amboss 2 als auch die Sonotrode 4 umfassen nach Fig. 1 drei derartige Kammerabschnitte 8a, 8b zur Bildung von drei Verdichtungskammern 6 für die Verdichtung der Litzen eines 3-poligen Kabels in einem einzelnen Arbeitsschritt.

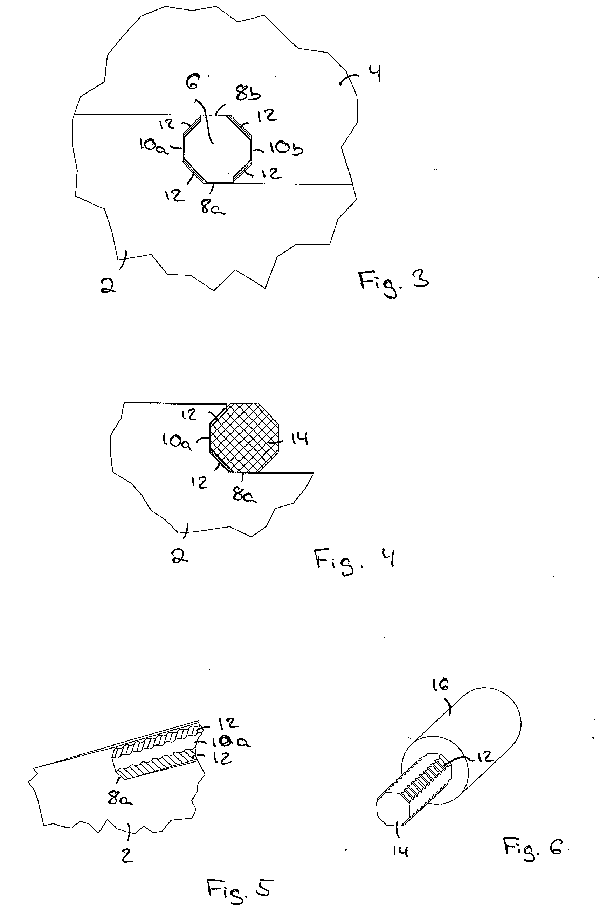

Der Amboss 2 aus Fig. 1 ist in Fig. 2 noch einmal in Schrägdarstellung gezeigt. In diesem Ausführungsbeispiel weisen jeweils zwei Wandungen 10a der Kammerabschnitte 8a des Ambosses 2 eine Wellenstruktur 12 auf. Dieses Detail ist in Fig. 5 nochmal vergrößert dargestellt. Wie der Fig. 3 zu entnehmen ist, sind ebenfalls zwei Wandungen 10b der Sonotrode 4 mit einer solchen Wellenstruktur 12 versehen. Diese Wellenstruktur 12 erzeugt den benötigten Wellendruck in der Verdichtungskammer 6 zum Aufbau der Reibung zwischen den Einzeldrähten der Litzen. Im Ausführungsbeispiel ist jeweils jede zweite Wandung 10a, 10b des Ambosses 2 und der Sonotrode 4 mit einer solchen Wellenstruktur versehen.

Die Kammerabschnitte 8a des Ambosses 2 in Fig. 2 sind in Längsrichtung (L), also in Einsteckrichtung der Litzen, konisch ausgeformt. Dies bedeutet, dass sich die Verdichtungskammer 6 in Längsrichtung (L) konisch verbreitert und somit bei eingelegten Litzen im Bereich der Isolation enger ausgebildet ist als im Bereich der Litzenenden. Dies führt zu einer gleichmäßigen Verdichtung der Litzen über die gesamte Länge.

Im Ausführungsbeispiel nach Fig. 4 ist ein Querschnitt durch einen Amboss mit eingelegten und bereits zum Achteck verdichteten Litzen 14 gezeigt. Eine Leitung 16 mit achteckig verdichteten Litzen 14 ist in Fig. 6 dargestellt. Zu erkennen ist auch die Wellenstruktur 12 durch die entsprechenden Wandungen 10a, 10b als Abdruck auf den verdichteten Litzen 14.

### Bezugszeichenliste

- 1: Anordnung
- 2: Amboss
- 4: Sonotrode
- 6: Verdichtungskammer
- 8a: Kammerabschnitt des Ambosses
- 8b: Kammerabschnitt der Sonotrode
- 10a: Wandungen des Ambosses
- 10b: Wandungen der Sonotrode
- 12: Wellenstruktur
- 14: Litzen
- 16: Leitung

## Patentansprüche

1. Anordnung (1) zum Ultraschallverdichten von Litzen (14) mit einem Amboss (2) und einer Sonotrode (4), wobei der Amboss (2) und die Sonotrode (4) jeweils einen Kammerabschnitt (8a, 8b) aufweisen, der jeweils derart ausgebildet ist, dass die Kammerabschnitte (8a, 8b) des Ambosses (2) und der Sonotrode (4) beim Ultraschallverdichten eine gemeinsame Verdichtungskammer (6) zur Aufnahme der Litzen (14) bilden,
**dadurch gekennzeichnet,**
**dass** die Verdichtungskammer (6) im Querschnitt im Wesentlichen n-eckförmig mit n>4 ausgebildet ist.

2. Anordnung (1) zum Ultraschallverdichten nach Anspruch 1,
**dadurch gekennzeichnet,**
**dass** der Querschnitt der Verdichtungskammer (6) im Wesentlichen achteckig ist.

3. Anordnung (1) zum Ultraschallverdichten nach Anspruch 1 oder 2,
**dadurch gekennzeichnet,**
**dass** im Falle einer geraden Anzahl von n der Kammerabschnitt (8a, 8b) des Ambosses (2) und der Sonotrode (4) jeweils n/2 Wandungen (10a, 10b) der Verdichtungskammer (6) aufweisen.

4. Anordnung (1) zum Ultraschallverdichten nach einem der Ansprüche 1 bis 3,
**dadurch gekennzeichnet,**
**dass** zumindest ein Teil der Wandungen (10a, 10b) der Kammerabschnitte (8a., 8b) des Ambosses (2) und der Sonotrode (4) in Längsrichtung (L) der Verdichtungskammer (6) eine Wellenstruktur aufweist.

5. Anordnung (1) zum Ultraschallverdichten nach Anspruch 4,
**dadurch gekennzeichnet,**
**dass** jede zweite Wandung (10a, 10b) der Verdichtungskammer (6) eine solche Wellenstruktur aufweist.

6. Anordnung (1) zum Ultraschallverdichten nach einem der Ansprüche 1 bis 5,
**dadurch gekennzeichnet,**
**dass** der Amboss (2) und die Sonotrode (4) mehrere nebeneinander angeordnete Kammerabschnitte (8a, 8b) zur Bildung von mehreren nebeneinander angeordneten Verdichtungskammern (6) aufweisen.

7. Anordnung (1) zum Ultraschallverdichten nach einem der Ansprüche 1 bis 6,
**dadurch gekennzeichnet,**
**dass** die Verdichtungskammer (6) zumindest einen ersten Querschnitt und einen in Längsrichtung (L) versetzten, zweiten Querschnitt aufweist, wobei der zweite Querschnitt eine größere Querschnittsfläche aufweist als der erste Querschnitt.

8. Anordnung (1) zum Ultraschallverdichten nach Anspruch 7,
**dadurch gekennzeichnet,**
**dass** zumindest der Kammerabschnitt (8a) des Ambosses (2) in Längsrichtung (L) konisch ausgebildet ist.

9. Verfahren zur Herstellung eines Kabels oder einer Leitung (16) mit zumindest an einem Ende freiliegender Litze (14) mit einer Mehrzahl von Einzeldrähten, wobei die Einzeldrähte durch Ultraschallverdichtung in einer Verdichtungskammer (6) miteinander verbunden werden,
**dadurch gekennzeichnet,**
**dass** die Ultraschallverdichtung derart erfolgt, dass der Querschnitt der Litze (14) nach der Ultraschallverdichtung im Wesentlichen n-eckig mit n>4 ist.
